# EUROPÄISCHE PATENTSCHRIFT

(11) **EP 3 241 697 B1**
(45) Veröffentlichungstag und Bekanntmachung des Hinweises auf die Patenterteilung: **01.08.2018**
(21) Anmeldenummer: 16167887.5
(22) Anmeldetag: 02.05.2016
(51) Int. Cl.: B60J 1/17, B60J 1/14

(54) **FENSTERHEBER**
WINDOW LIFTER
DISPOSITIF DE LEVAGE DE FENETRE

(43) Veröffentlichungstag der Anmeldung: 08.11.2017
(73) Patentinhaber: Magna Steyr Fahrzeugtechnik AG & Co KG, 8041 Graz (AT)
(72) Erfinder: BOMBARDELLA, Andreas, 8054 Graz (AT); GEIGER-REINBACHER, Bernhard, 8151 Hitzendorf (AT); HASELWANTER, Alexander, 8010 Graz (AT); MAYRHOFER, Alois, 8020 Graz (AT); NELLESSEN, Dirk, 8055 Graz (AT); ROSSIO, Daniele, 8020 Graz (AT)
(74) Vertreter: Zangger, Bernd

(56) Entgegenhaltungen:
- WO-A1-2005/108192
- DE-A1- 10 234 100
- FR-A1- 2 960 509
- JP-A- 2014 223 821

## Beschreibung

### Gebiet der Erfindung

Die vorliegende Erfindung betrifft einen Fensterheber zum Heben und Senken einer Scheibe eines Kraftfahrzeuges und eine Fahrzeugtür umfassend zumindest einen solchen Fensterheber.

### Stand der Technik

Derartige Fensterheber, wie zum Beispiel im Stand der Technik Dokument DE10234100 offenbart, werden insbesondere an Türen von Kraftfahrzeugen eingesetzt um eine vertikale Seitenscheibe oder auch an einer Heckklappe um eine Heckklappenscheibe zu öffnen und zu schließen. Üblicherweise werden die Scheiben dabei im Wesentlichen linear auf- und abgefahren.

Es ist bereits bekannt dass es vorteilhaft sein kann, eine Scheibe im geschlossenen Zustand bündig an einem Fensterrahmen, insbesondere an einer Blende oder einer Dichtung, abzulegen, bevorzugt bündig mit der Fahrzeugaußenseite, so dass ein besserer optischer Eindruck entsteht und die aerodynamischen Eigenschaften des Fahrzeuges verbessert werden. Ein Vorteil ist hierbei auch die Verringerung der Scheibenverschmutzung. Derart bündig abgelegte Scheiben weisen eine sogenannte "Flush-Optik" auf.

Insbesondere zum bündigen Anpressen einer Scheibe am Ende einer Schließbewegung an eine Dichtung ist jedoch ein hoher Anpressdruck erforderlich.

### Zusammenfassung der Erfindung

Es ist eine Aufgabe der Erfindung, einen Fensterheber anzugeben, der ein zuverlässiges bündiges Schließen einer Scheibe ermöglicht und eine Fahrzeugtür umfassend einen solchen Fensterheber.

Die Lösung der Aufgabe erfolgt durch einen Fensterheber zum Heben und Senken einer Scheibe eines Kraftfahrzeuges, umfassend zumindest eine Führungsschiene, einen Antriebsmechanismus, ein erstes Führungselement und ein zweites Führungselement, wobei die beiden Führungselemente in der Führungsschiene in einem Linearführungsabschnitt der Führungsschiene im Wesentlichen linear geführt sind, wobei die Scheibe an den beiden Führungselementen befestigbar ist, wobei der Antriebsmechanismus zumindest mit dem ersten Führungselement verbunden ist, wobei zumindest das erste Führungselement als Hebelelement ausgeführt ist, wobei das erste Führungselement eine Führungsachse aufweist an der das erste Führungselement in der Führungsschiene geführt ist und eine von der Führungsachse beabstandete Gestängeachse aufweist an der der Antriebsmechanismus mit dem ersten Führungselement verbunden ist, so dass bei einem Zwangsstopp der linearen Bewegung der Führungsachse in der Führungsschiene und weiterem Antrieb über den Antriebsmechanismus das erste Führungselement eine Schwenkbewegung ausführt, so dass eine an dem ersten Führungselement befestigte Scheibe eine Bewegungskomponente normal auf die lineare Führung in der Führungsschiene ausführt.

Erfindungsgemäß ist zumindest eines der Führungselemente das in einer Führungsschiene bewegbar ist als Hebel eingerichtet und wirkt mit einem Zwangsstopp einer linearen Bewegung des Führungselements so zusammen, dass der Hebel, insbesondere am Ende einer Schließbewegung, eine Schwenkbewegung vollführt so dass eine daran befestigte Scheibe im Wesentlichen normal auf die Führungsschiene bündig gegen einen Fensterrahmen, insbesondere gegen eine Dichtung, gedrückt werden kann. Die Bewegung der Scheibe kann dabei sowohl eine Komponente in Richtung normal auf die lineare Führung aufweisen als auch eine Komponente entlang der linearen Führung und insbesondere selbst eine Schwenkbewegung ausführen.

Die Führungsachse des ersten Führungselements steht bevorzugt im Wesentlichen normal auf die Führungsschiene und kann so in der Führungsschiene gleiten.

Die Gestängeachse ist bevorzugt parallel zur Führungsachse ausgerichtet und von der Führungsachse sowie von der Führungsschiene beabstandet angeordnet. Die Gestängeachse ist bevorzugt durch einen Berührungspunkt des Antriebsmechanismus mit dem ersten Führungselement festgelegt. Die Gestängeachse ist bevorzugt eine Drehachse für die drehbare Anbindung des Antriebsmechanismus am ersten Führungselement.

Der Begriff "Antriebsmechanismus" kann insbesondere durch eine Antriebsstange erfüllt sein, aber auch beispielsweise durch einen Seilantrieb oder einen Seilzug, der ebenso wie eine Stange oder ein Gestänge elektrisch, hydraulisch oder manuell betätigt werden kann.

Der Antriebsmechanismus kann daher, insbesondere mittels einer Antriebsstange, die beispielsweise mittels einer von einem Motor und einem dazugehörigen Zahnrad angetriebenen Zahnstange bewegbar ist, oder über einen Seilantrieb bzw. Seilzug elektrisch, hydraulisch oder manuell angetrieben werden.

Weiterbildungen der Erfindung sind in den abhängigen Ansprüchen, der Beschreibung sowie den beigefügten Zeichnungen angegeben.

Vorzugsweise ist an der Führungsschiene ein Anschlag für das erste und/oder zweite Führungselement ausgebildet, so dass durch den Anschlag die lineare Bewegung der Führungsachse in der Führungsschiene gestoppt wird. Besonders bevorzugt kann der Anschlag durch ein Ende der Führungsschiene gebildet sein und eines, insbesondere das obere Führungselement, beim zunächst linearen Schließen gegen den Anschlag stoßen und somit die lineare Bewegung beenden und die Schwenkbewegung auslösen.

Bevorzugt weist die Führungsschiene einen Schwenk-Kulissenabschnitt auf der gegenüber dem Linearführungsabschnitt einen abstehenden Fortsatz bildet, wobei der Fortsatz insbesondere kreisbogenförmig oder ähnlich ausgebildet ist.

Der Schwenk-Kulissenabschnitt und der Anschlag sind bevorzugt so an der Führungsschiene positioniert, dass bei einem Zwangsstopp der linearen Bewegung der Führungsachse in der Führungsschiene durch den Anschlag und weiterem Antrieb über den Antriebsmechanismus in der selben Richtung, gegen den Anschlag, das erste Führungselement eine Schwenkbewegung ausführt, bei der die Führungsachse des Führungselements im Schwenk-Kulissenabschnitt geführt wird.

Das erste Führungselement weist vorzugsweise eine Scheiben-Befestigungsachse zur Befestigung der Scheibe am Führungselement auf, wobei die Scheiben-Befestigungsachse parallel und beabstandet zur Führungsachse und zur Gestängeachse ausgebildet ist. Die Scheiben-Befestigungsachse ist bevorzugt eine Drehachse zur drehbaren Verbindung der Scheibe am ersten Führungselement.

Vorzugsweise ist der Abstand zwischen Führungsachse und Gestängeachse kleiner als der Abstand der Führungsachse zur Scheiben-Befestigungsachse. Das erste Führungselement kann bevorzugt Y-förmig ausgebildet sein oder auch V-förmig oder dreieckig.

Der Abstand der Führungsachse zum Anschlag ist vorzugsweise deutlich größer als der Abstand der Führungsachse zur Gestängeachse und/oder zur Scheiben-Befestigungsachse.

Das erste Führungselement und somit das Hebelelement kann insbesondere in Einbaulage das untere Führungselement der beiden Führungselemente sein bzw. das unterste von mehreren Führungselementen in der selben Führungsschiene, so dass insbesondere der untere Bereich einer Scheibe stark gegen den Fensterrahmen bzw. eine Dichtung gedrückt werden kann.

Vorzugsweise weisen das erste und/oder zweite Führungselement ein Anbindungselement zur Anbindung des Führungselements an der Scheibe auf, wobei das Anbindungselement bevorzugt drehbar mit dem Führungselement, insbesondere an der Scheiben-Befestigungsachse, verbunden ist.

Das zweite Führungselement kann vorzugsweise wie das erste Führungselement als Hebelelement ausgebildet sein und auch sonst die genannten Merkmale wie das erste Führungselement aufweisen und insbesondere baugleich mit diesem sein.

Alternativ kann das zweite Führungselement als einfacher Gleiter ausgebildet sein, der in der Führungsschiene geführt wird, insbesondere vollständig, also auf seiner gesamten Führungslänge, linear geführt wird.

Zusätzlich zu den beiden genannten beiden Führungselementen können weitere Führungselemente, insbesondere als Hebel oder als Gleiter, in der Führungsschiene geführt sein.

Der Fensterheber kann eine weitere Führungsschiene mit weiteren ersten und zweiten Führungselementen umfassen, wobei die weitere Führungsschiene und die weiteren ersten und zweiten Führungselemente bevorzugt gleich ausgebildet sind wie die zumindest eine Führungsschiene und das erste und zweite Führungselement, wobei besonders bevorzugt der Antriebsmechanismus mit dem ersten Führungselement und dem weiteren ersten Führungselement verbunden ist. Somit können insbesondere Führungsschienen an beiden Seiten einer Scheibe zu dessen Führung vorgesehen sein.

Eine Fahrzeugtür kann erfindungsgemäß zumindest einen Fensterheber wie zuvor beschrieben umfassen, sowie einen Fensterrahmen und eine Scheibe, wobei die Scheibe an den beiden Führungselementen befestigt ist, wobei beim Schließen der Scheibe die Scheibe eine Bewegungskomponente normal auf die lineare Führung in der Führungsschiene ausführt, so dass die Scheibe gegen den Fensterrahmen gedrückt wird. Eine "Fahrzeugtür" kann nicht nur eine seitliche Tür eines Fahrzeuges sein, sondern beispielsweise auch eine Rückwandtür, Hecktür oder Heckklappe eines Fahrzeuges.

Vorzugsweise umfasst der Fensterrahmen eine Dichtung, die insbesondere um den Fensterrahmen umlaufen kann, und die Scheibe wird beim Schließen gegen die Dichtung gedrückt.

Die Fahrzeugtür kann auch einen Elektromotor zur Aktuierung des Antriebsmechanismus beinhalten.

### Kurzbeschreibung der Zeichnungen

Die Erfindung wird im Folgenden beispielhaft unter Bezugnahme auf die Zeichnungen beschrieben.
- Fig. 1: ist eine schematische Ansicht einer erfindungsgemäßen Fahrzeugtür mit erfindungsgemäßem Fensterheber von vorne bzw. vom inneren eines Fahrzeuges aus.
- Fig. 2: ist eine dreidimensionale Detaildarstellung, der oberen linken Ecke der Fahrzeugtür gemäß Fig. 1.
- Fig. 3: ist eine Detaildarstellung der Fahrzeugtür von der Seite in geschlossener Stellung der Scheibe.
- Fig. 4: ist eine Teildarstellung der Fig. 3 um den Bereich des ersten, unteren, Führungselements.
- Fig. 5: ist eine Teildarstellung der Fig. 3 um den Bereich des zweiten, oberen, Führungselements.
- Fig. 6: ist eine Teildarstellung der Fig. 3 um den Bereich der Dichtung unten.
- Fig. 7: ist eine Teildarstellung der Fig. 3 um den Bereich der Dichtung oben.
- Fig. 8: ist eine Detaildarstellung der Fahrzeugtür von der Seite in geöffneter Stellung der Scheibe.
- Fig. 9: ist eine Teildarstellung der Fig. 8 um den Bereich des ersten, unteren, Führungselements.
- Fig. 10: ist eine Teildarstellung der Fig. 8 um den Bereich des zweiten, oberen, Führungselements.
- Fig. 11: ist eine Teildarstellung der Fig. 8 um den Bereich der Dichtung unten.
- Fig. 12: ist eine Teildarstellung der Fig. 8 um den Bereich der Dichtung oben.
- Fig. 13: ist eine dreidimensionale Detaildarstellung, der oberen linken Ecke der Fahrzeugtür gemäß Fig. 1 in einer alternativen Ausführung.

### Detaillierte Beschreibung der Erfindung

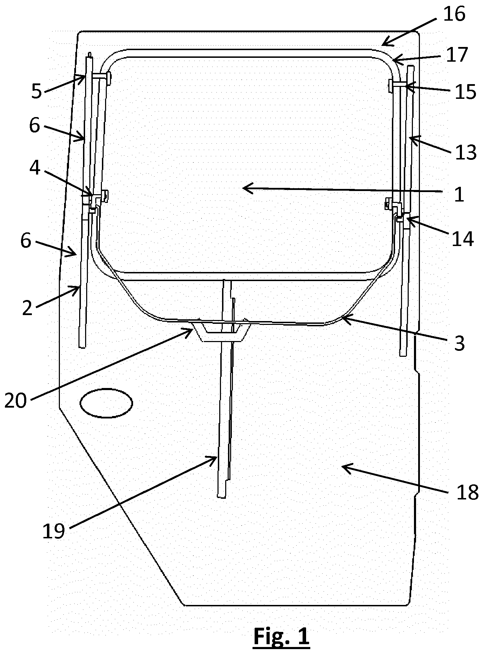

In Fig. 1 ist eine erfindungsgemäße Fahrzeugtür mit erfindungsgemäßem Fensterheber von vorne, bzw. im verbauten Zustand in einem Fahrzeug von innen, dargestellt.

Die Fahrzeugtür umfasst ein Außenblech 18 mit einer von einem Fensterrahmen 16 umrahmten Öffnung für eine Scheibe 1. Ferner umfasst die Fahrzeugtür einen Fensterheber zum Heben und Senken der Scheibe 1, umfassend eine Führungsschiene 2 zur Führung der Scheibe 1 an der linken Seite der Scheibe 1 und eine weitere Führungsschiene 13 zur Führung der Scheibe 1 an der rechten Seite der Scheibe 1.

In der Führungsschiene 2 sind, als unteres Führungselement, ein erstes Führungselement 4 und, als oberes Führungselement, ein zweites Führungselement 5 geführt. Analog dazu sind in der weiteren Führungsschiene 13, als unteres Führungselement, ein weiteres erstes Führungselement 14 und, als oberes Führungselement, ein weiteres zweites Führungselement 15 geführt.

Alle Führungselemente sind in einem unteren und einem oberen Linearführungsabschnitt 6 der Führungsschienen 2 bzw. 13 im Wesentlichen linear geführt.

Die Scheibe 1 ist an den beiden Führungselementen 4, 5 sowie den weiteren Führungselementen 14, 15 befestigt.

Das erste Führungselement 4 sowie das weitere erste Führungselement 13 können durch einen als Stange ausgebildeten Antriebsmechanismus 3 nach oben und unten verfahren werden, wobei der Antriebsmechanismus 3 über eine Gestängeaufnahme 20 entlang einer Schiene 19 vorzugsweise mittels eines nicht dargestellten Linearantriebes, beispielsweise angetrieben von einem Elektromotor, bewegbar ist.

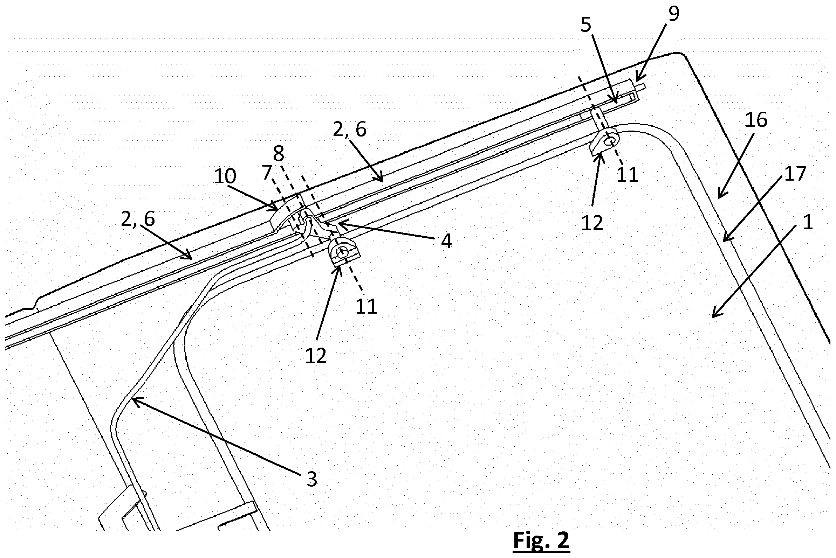

In Fig. 2 ist die obere linke Ecke der Fahrzeugtür gemäß Fig. 1 in einer ersten Ausführungsform genauer dargestellt.

Das erste Führungselement 4, sowie jeweils analog das weitere erste Führungselement 14, ist als Hebelelement ausgeführt. Das erste Führungselement 4 weist eine Führungsachse 7 auf, die durch die Achse eines Führungsbolzens gebildet wird, der etwa normal auf die Führungsschiene 2 seitlich in der Führungsschiene 2 geführt ist. Der Führungsbolzen und somit die Führungsachse 7 liegen in Einbaulage etwa horizontal und somit normal auf die etwa vertikal verbaute Führungsschiene 2 und etwa parallel zur Scheibe 1.

Ferner weist das erste Führungselement 4 eine von der Führungsachse 7 beabstandete, und zur Führungsachse 7 parallele Gestängeachse 8 auf, an der der Antriebsmechanismus 3 mit dem ersten Führungselement 4 drehbar verbunden ist. Die Gestängeachse 8 stellt eine Drehachse für die Anbindung des Antriebsmechanismus 3 dar.

Die Gestängeachse 8 des ersten Führungselements 4 ist, zumindest während der linearen Bewegung des ersten Führungselements 4, von der Ebene der linearen Führung in den Führungsschienen 2 und 13 beabstandet angeordnet, also versetzt zu einer Ebene die entlang der Führungsschiene 2 und somit durch die Führungsachse 7 verläuft, insbesondere versetzt auf der der Scheibe 1 gegenüberliegenden Seite.

Am oberen Ende der Führungsschiene 2 ist ein Anschlag 9 ausgebildet, der einen Zwangsstopp für das obere, zweite Führungselement 5 bildet.

Bei einem Zwangsstopp der linearen Bewegung des zweiten Führungselements 5 wird durch dessen Verbindung mit dem ersten Führungselement 4 über die Scheibe 1 das erste Führungselement 4 und insbesondere dessen Führungsachse 7 in seiner linearen Bewegung zwangsgestoppt, wodurch bei weiterem Antrieb über den Antriebsmechanismus 3 das erste Führungselement 4 eine Schwenkbewegung ausführt, bei der die Gestängeachse 8 nach oben und im Fahrzeug nach innen geschwenkt wird, so dass ein der Gestängeachse 8 gegenüberliegendes Ende des ersten Führungselements 4 und die dort befestigte Scheibe 1 eine Bewegungskomponente normal auf die lineare Führung in der Führungsschiene 2 ausführt und nach außen gedrückt wird, insbesondere gegen eine umlaufende Dichtung 17 am Fensterrahmen 16.

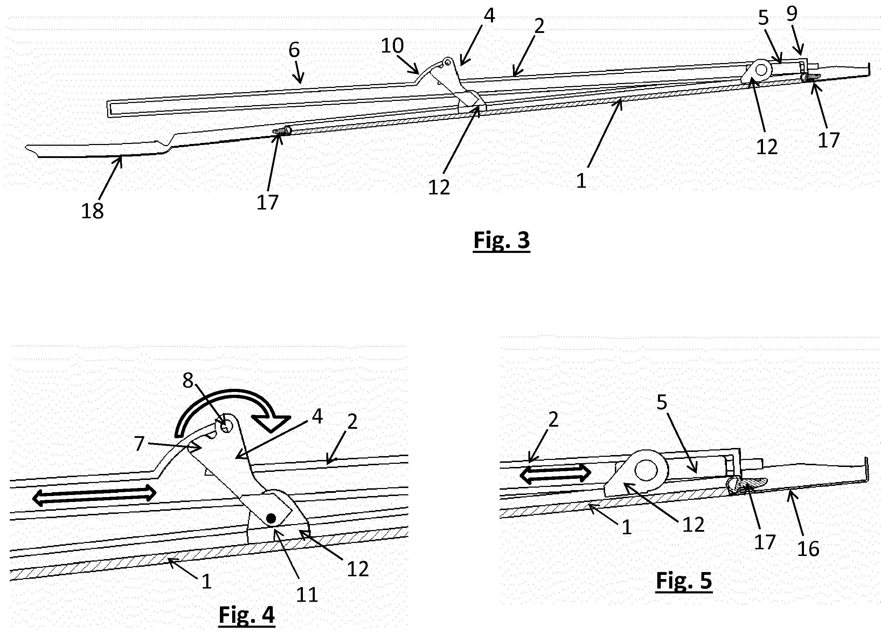

Die Führungsschiene 2 weist zudem einen Schwenk-Kulissenabschnitt 10 auf, der gegenüber dem Linearführungsabschnitt 6 einen abstehenden Fortsatz bildet, wobei der Fortsatz kreisbogenförmig ausgebildet ist, nämlich als Kreisbogen der dem inneren des Fahrzeuges zugewandt ist, wie vor allem in Fig. 4 gut ersichtlich.

Die Fig. 3 zeigt die Fahrzeugtür gemäß Fig. 2 von der Seite in geschlossener Stellung der Scheibe 1. Fig. 4 zeigt genauer den Bereich um das erste, in der Fahrzeugtür untere, Führungselement 4. Fig. 5 zeigt analog den Bereich um das zweite, obere, Führungselement 5.

Der Schwenk-Kulissenabschnitt 10 und der Anschlag 9 sind so an der Führungsschiene 2 positioniert, dass bei einem Stopp der linearen Bewegung der Führungsachse 7 in der Führungsschiene 2 durch den Anschlag 9 und weiterem Antrieb über den Antriebsmechanismus 3 das erste Führungselement 4 eine Schwenkbewegung ausführt, bei der die Führungsachse 7 im Schwenk-Kulissenabschnitt 10 nach innen geführt wird. Dabei wird das dem Schwenk-Kulissenabschnitt 10 gegenüberliegende Ende des ersten Führungselements 4 nach unten und nach außen geschwenkt und hierdurch der mit diesem Ende des Hebels verbundene Abschnitt der Scheibe 1 nach unten und außen geschwenkt. Die lineare Bewegung des ersten Führungselements 4 im Linearführungsabschnitt 6, sowie die Schwenkbewegung im Schwenk-Kulissenabschnitt 10 sind in der Fig. 4 als Pfeile dargestellt.

Das erste Führungselement 4 weist an diesem genannten Ende eine Scheiben-Befestigungsachse 11 zur drehbaren Lagerung der Scheibe 1 auf, wobei die Scheiben-Befestigungsachse 11 parallel und beabstandet zur Führungsachse 7 und zur Gestängeachse 8 ausgebildet ist.

Wie in Fig. 4 gut ersichtlich ist der Abstand zwischen Führungsachse 7 und Gestängeachse 8 kleiner als der Abstand der Führungsachse 7 zur Scheiben-Befestigungsachse 11. Das erste Führungselement 4 ist insgesamt Y-förmig ausgebildet, wobei die Führungsachse 7 und die Gestängeachse 8 an den beiden Schenkeln des Y ausgebildet sind und die Scheiben-Befestigungsachse 11 am alleinstehenden Ende des Y.

Das erste Führungselement 4 und das zweite Führungselement 5 weisen jeweils ein Anbindungselement 12 zur Anbindung des Führungselements 4 bzw. 5 an der Scheibe 1 auf. Das Anbindungselement 12 ist jeweils drehbar mit dem Führungselement 4 bzw. 5 an der jeweiligen Scheiben-Befestigungsachse 11 verbunden.

Das zweite Führungselement 5 ist als einfacher Gleiter ausgebildet, der in der Führungsschiene 2 bis zum Erreichen des Anschlags 9 linear geführt wird, wie durch einen Pfeil in Fig. 5 gekennzeichnet.

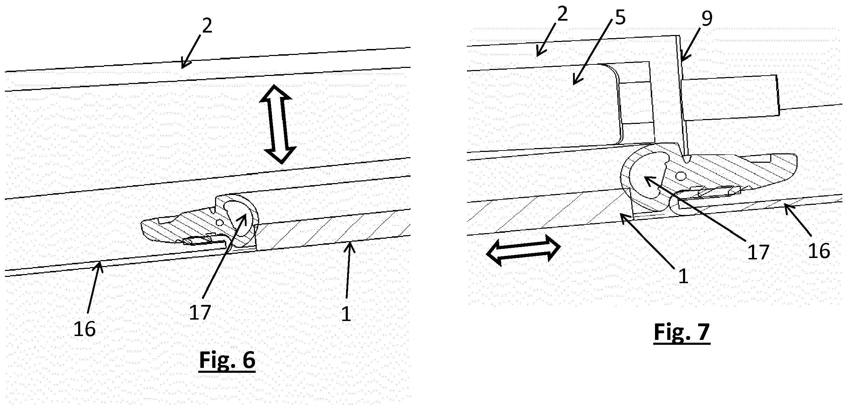

Fig. 6 ist eine Teildarstellung der Fig. 3 um den Bereich der Dichtung 17 im unteren Bereich des Fensterrahmens 16, Fig. 7 entsprechend eine Teildarstellung der Fig. 3 um den Bereich der Dichtung 17 oben, bei geschlossener Scheibe 1. Dabei ist die Bewegungsrichtung der Scheibe 1 beim Schließen im unteren Bereich der Scheibe 1 im Wesentlichen eine horizontale Bewegung (siehe Pfeil in Fig. 6), im oberen Bereich der Scheibe 1 eine vertikale Bewegung (Pfeil in Fig. 7).

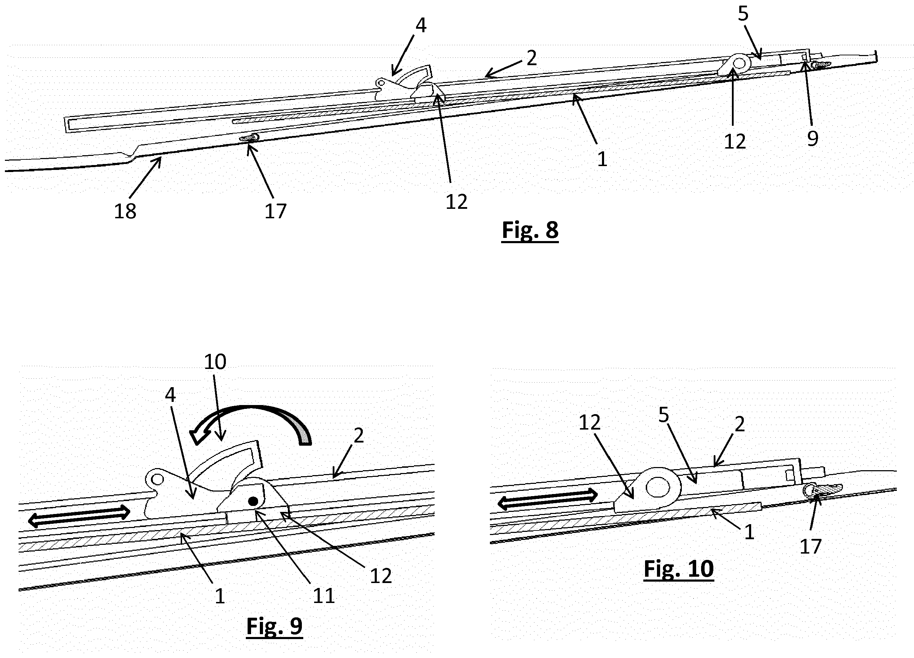

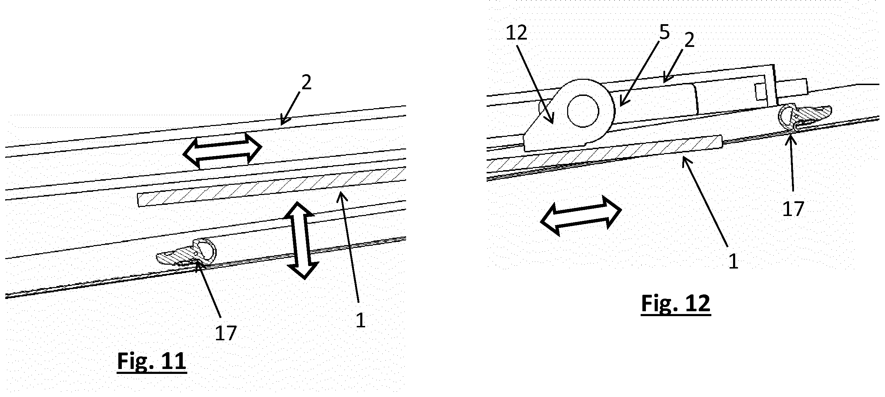

Die Fig. 8 bis 12 entsprechen im Wesentlichen den Figuren 3 bis 7, jedoch in geöffneter Stellung der Scheibe 1. Das erste Führungselement 4 läuft dabei bereits in der linearen Führung der Führungsschiene 2. Die Scheibe 1 ist dabei, wie besonders in Fig. 11 ersichtlich, von der Dichtung 17 abgehoben.

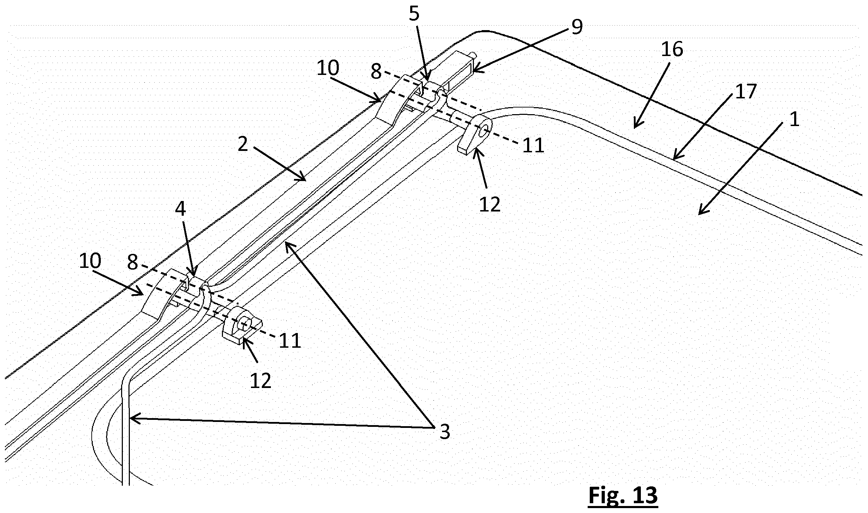

In der alternativen Ausführung der Fahrzeugtür bzw. des Fensterhebers gemäß Fig. 13 ist das zweite Führungselement 5, wie das erste Führungselement 4, als Hebelelement ausgebildet, und weist die weiteren Merkmale auf, die bereits für das erste Führungselement 4 beschrieben wurden. Die Führungsschienen 2 und 13 weisen dann jeweils zwei Schwenk-Kulissenabschnitte 10 auf. Das zweite Führungselement 5 ist in dem ihm zugeordneten Schwenk-Kulissenabschnitt 10 führbar und kann auch unmittelbar am Anschlag 9 gestoppt werden.

### Bezugszeichenliste

- 1: Scheibe
- 2: Führungsschiene
- 3: Antriebsmechanismus
- 4: erstes Führungselement
- 5: zweites Führungselement
- 6: Linearführungsabschnitt
- 7: Führungsachse
- 8: Gestängeachse
- 9: Anschlag
- 10: Schwenk-Kulissenabschnitt
- 11: Scheiben-Befestigungsachse
- 12: Anbindungselement
- 13: weitere Führungsschiene
- 14: weiteres erstes Führungselement
- 15: weiteres zweites Führungselement
- 16: Fensterrahmen
- 17: Dichtung
- 18: Außenblech
- 19: Schiene
- 20: Gestängeaufnahme

## Patentansprüche

1. Fensterheber zum Heben und Senken einer Scheibe (1) eines Kraftfahrzeuges, umfassend zumindest eine Führungsschiene (2), einen Antriebsmechanismus (3), ein erstes Führungselement (4) und ein zweites Führungselement (5), wobei die beiden Führungselemente (4, 5) in der Führungsschiene (2) in einem Linearführungsabschnitt (6) der Führungsschiene (2) im Wesentlichen linear geführt sind, wobei die Scheibe (1) an den beiden Führungselementen (4, 5) befestigbar ist, wobei der Antriebsmechanismus (3) zumindest mit dem ersten Führungselement (4) verbunden ist,
**dadurch gekennzeichnet, dass** zumindest das erste Führungselement (4) als Hebelelement ausgeführt ist, wobei das erste Führungselement (4) eine Führungsachse (7) aufweist an der das Führungselement (4) in der Führungsschiene (2) geführt ist und eine von der Führungsachse (7) beabstandete Gestängeachse (8) aufweist an der der Antriebsmechanismus (3) mit dem ersten Führungselement (4) verbunden ist, so dass bei einem Zwangsstopp der linearen Bewegung der Führungsachse (7) in der Führungsschiene (2) und weiterem Antrieb über den Antriebsmechanismus (3) das erste Führungselement (4) eine Schwenkbewegung ausführt, so dass eine an dem ersten Führungselement (4) befestigte Scheibe (1) eine Bewegungskomponente normal auf die lineare Führung in der Führungsschiene (2) ausführt.

2. Fensterheber nach Anspruch 1,
**dadurch gekennzeichnet, dass** an der Führungsschiene (2) ein Anschlag (9) für das erste und/oder zweite Führungselement (4, 5) ausgebildet ist, so dass durch den Anschlag (9) die lineare Bewegung der Führungsachse (7) in der Führungsschiene (2) zwangsgestoppt wird.

3. Fensterheber nach zumindest einem der vorhergehenden Ansprüche,
**dadurch gekennzeichnet, dass** die Führungsschiene (2) einen Schwenk-Kulissenabschnitt (10) aufweist der gegenüber dem Linearführungsabschnitt (6) einen abstehenden Fortsatz bildet, wobei der Fortsatz insbesondere kreisbogenförmig ausgebildet ist.

4. Fensterheber nach Anspruch 2 und Anspruch 3,
**dadurch gekennzeichnet, dass** der Schwenk-Kulissenabschnitt (10) und der Anschlag (9) so an der Führungsschiene (2) positioniert sind, dass bei einem Zwangsstopp der linearen Bewegung der Führungsachse (7) in der Führungsschiene (2) durch den Anschlag (9) und weiterem Antrieb über den Antriebsmechanismus (3) das erste Führungselement (4) eine Schwenkbewegung ausführt, bei der die Führungsachse (7) im Schwenk-Kulissenabschnitt (10) geführt wird.

5. Fensterheber nach zumindest einem der vorhergehenden Ansprüche,
**dadurch gekennzeichnet, dass** das erste Führungselement (4) eine Scheiben-Befestigungsachse (11) aufweist, wobei die Scheiben-Befestigungsachse (11) parallel und beabstandet zur Führungsachse (7) und zur Gestängeachse (8) ausgebildet ist.

6. Fensterheber nach Anspruch 5,
**dadurch gekennzeichnet, dass** der Abstand zwischen Führungsachse (7) und Gestängeachse (8) kleiner ist als der Abstand der Führungsachse (7) zur Scheiben-Befestigungsachse (11), wobei das erste Führungselement (4) bevorzugt Y-förmig ausgebildet ist.

7. Fensterheber nach zumindest einem der vorhergehenden Ansprüche,
**dadurch gekennzeichnet, dass** das erste Führungselement (4) und/oder das zweite Führungselement (5) ein Anbindungselement (12) zur Anbindung des Führungselements (4, 5) an der Scheibe (1) aufweist, wobei das Anbindungselement (12) bevorzugt drehbar mit dem Führungselement (4, 5) verbunden ist.

8. Fensterheber nach zumindest einem der vorhergehenden Ansprüche,
**dadurch gekennzeichnet, dass** das erste Führungselement (4) in Einbaulage das untere Führungselement ist.

9. Fensterheber nach zumindest einem der vorhergehenden Ansprüche,
**dadurch gekennzeichnet, dass** das zweite Führungselement (5) wie das erste Führungselement (4) als Hebelelement ausgebildet hat.

10. Fensterheber nach zumindest einem der vorhergehenden Ansprüche 1 bis 8,
**dadurch gekennzeichnet, dass** das zweite Führungselement (5) als einfacher Gleiter ausgebildet ist, der in der Führungsschiene (2) geführt wird, insbesondere vollständig linear geführt wird.

11. Fensterheber nach zumindest einem der vorhergehenden Ansprüche,
**dadurch gekennzeichnet, dass** der Fensterheber eine weitere Führungsschiene (13) mit weiteren ersten und zweiten Führungselementen (14, 15) umfasst, wobei die weitere Führungsschiene (13) und die weiteren ersten und zweiten Führungselemente (14, 15) bevorzugt gleich ausgebildet sind wie die zumindest eine Führungsschiene (2) und das erste und zweite Führungselement (4, 5), wobei besonders bevorzugt der Antriebsmechanismus (3) mit dem ersten Führungselement (4) und dem weiteren ersten Führungselement (14) verbunden ist.

12. Fahrzeugtür umfassend zumindest einen Fensterheber nach zumindest einem der vorhergehenden Ansprüche, einen Fensterrahmen (16) und eine Scheibe (1), wobei die Scheibe (1) an den beiden Führungselementen (4, 5) befestigt ist, wobei beim Schließen der Scheibe (1) die Scheibe (1) eine Bewegungskomponente normal auf die lineare Führung in der Führungsschiene (2) ausführt, so dass die Scheibe (1) gegen den Fensterrahmen (16) gedrückt wird.

13. Fahrzeugtür nach zumindest einem der vorhergehenden Ansprüche,
**dadurch gekennzeichnet, dass** der Fensterrahmen (16) eine Dichtung (17) aufweist und die Scheibe (1) beim Schließen gegen die Dichtung (17) gedrückt wird.

## Claims

1. Window regulator for raising and lowering a windowpane (1) in a motor vehicle, comprising at least one guide rail (2), a drive mechanism (3), a first guide element (4) and a second guide element (5), wherein the two guide elements (4, 5) in the guide rail (2) are guided substantially linearly in a linear guide section (6) of the guide rail (2), wherein the windowpane (1) can be fastened to the two guide elements (4, 5), wherein the drive mechanism (3) is connected at least to the first guide element (4),
**characterized in that** at least the first guide element (4) is configured as a lever element, wherein the first guide element (4) has a guide shaft (7) on which the first guide element (4) is conducted in the guide rail (2) and has a linkage shaft (8) spaced apart from the guide shaft (7), at which the drive mechanism (3) is connected to the first guide element (4), so that during a forced stop of the linear movement of the guide shaft (7) in the guide rail (2) and further drive via the drive mechanism (3), the first guide element (4) performs a pivoting movement, so that a windowpane (1) fastened to the first guide element (4) executes a movement component perpendicularly to the linear guide in the guide rail (2).

2. Window regulator according to Claim 1,
**characterized in that** a stop (9) for the first and/or second guide element (4, 5) is preferably configured on the guide rail (2), so that through the stop (9) the linear movement of the guide shaft (7) in the guide rail (2) is force-stopped.

3. Window regulator according to at least one of the preceding claims,
**characterized in that** the guide rail (2) has a pivoting-connecting section (10) which forms a projecting extension opposite the linear guide section (6), wherein the extension is particularly configured in a circular-arc form.

4. Window regulator according to Claim 2 and Claim 3,
**characterized in that** the pivoting-connecting section (10) and the stop (9) are positioned on the guide rail (2) in such a way that during a forced stop of the linear movement of the guide shaft (7) in the guide rail (2) by the stop (9) and further drive via the drive mechanism (3), the first guide element (4) performs a pivoting movement, during which the guide shaft (7) is guided in the pivoting-connecting section (10).

5. Window regulator according to at least one of the preceding claims,
**characterized in that** the first guide element (4) has a windowpane-fastening shaft (11), wherein the windowpane-fastening shaft (11) is configured parallel to and spaced apart from the guide shaft (7) and the linkage shaft (8).

6. Window regulator according to Claim 5,
**characterized in that** the distance between the guide shaft (7) and the linkage shaft (8) is smaller than the distance of the guide shaft (7) from the windowpane-fastening shaft (11), wherein the first guide element (4) is preferably Y-shaped in configuration.

7. Window regulator according to at least one of the preceding claims,
**characterized in that** the first guide element (4) and/or the second guide element (5) comprise an attachment element (12) for attaching the guide element (4, 5) to the windowpane (1), wherein the attachment element (12) is preferably rotatably connected to the guide element (4, 5).

8. Window regulator according to at least one of the preceding claims,
**characterized in that** the first guide element (4) in the installation position is the lower guide element.

9. Window regulator according to at least one of the preceding claims,
**characterized in that** the second guide element (5) is configured as a lever element in the same way as the first guide element (4).

10. Window regulator according to at least one of the preceding Claims 1 to 8,
**characterized in that** the second guide element (5) is configured as a single conductor which is guided, particularly completely, in the guide rail (2).

11. Window regulator according to at least one of the preceding claims,
**characterized in that** the window regulator comprises a further guide rail (13) with further first and second guide elements (14, 15), wherein the further guide rail (13) and the further first and second guide elements (14, 15) are preferably identically configured to the at least one guide rail (2) and the first and second guide elements (4, 5), wherein particularly preferably the drive mechanism (3) is connected to the first guide element (4) and the other first guide element (14).

12. Vehicle door comprising at least one window regulator according to at least one of the preceding claims, a window frame (16) and a windowpane (1), wherein the windowpane (1) is fastened to the two guide elements (4, 5), wherein when the windowpane (1) is being closed it executes a movement component perpendicular to the linear guide in the guide rail (2), so that the windowpane (1) is pressed against the window frame (16).

13. Vehicle door according to at least one of the preceding claims,
**characterized in that** the window frame (16) comprises a seal (17) and the windowpane (1) is pressed against the seal (17) when it is being closed.

## Revendications

1. Dispositif de levage de fenêtre pour lever et abaisser une vitre (1) d'un véhicule automobile, comprenant au moins un rail de guidage (2), un mécanisme d'entraînement (3), un premier élément de guidage (4) et un deuxième élément de guidage (5), les deux éléments de guidage (4, 5) étant guidés essentiellement linéairement dans le rail de guidage (2) dans une portion de guidage linéaire (6) du rail de guidage (2), la vitre (1) pouvant être fixée aux deux éléments de guidage (4, 5), le mécanisme d'entraînement (3) étant connecté au moins au premier élément de guidage (4),
**caractérisé en ce qu'**au moins le premier élément de guidage (4) est réalisé sous forme d'élément de levier, le premier élément de guidage (4) présentant un axe de guidage (7) au niveau duquel l'élément de guidage (4) est guidé dans le rail de guidage (2) et présente un axe de tringlerie (8) espacé de l'axe de guidage (7), au niveau duquel le mécanisme d'entraînement (3) est connecté au premier élément de guidage (4), de telle sorte que dans le cas d'un arrêt forcé du mouvement linéaire de l'axe de guidage (7) dans le rail de guidage (2) et de l'entraînement subséquent par le biais du mécanisme d'entraînement (3), le premier élément de guidage (4) effectue un mouvement de pivotement, de telle sorte qu'une vitre (1) fixée au premier élément de guidage (4) effectue une composante de mouvement perpendiculaire au guidage linéaire dans le rail de guidage (2).

2. Dispositif de levage de fenêtre selon la revendication 1,
**caractérisé en ce qu'**au niveau du rail de guidage (2) est réalisée une butée (9) pour le premier et/ou le deuxième élément de guidage (4, 5), de telle sorte que le mouvement linéaire de l'axe de guidage (7) dans le rail de guidage (2) soit arrêté de manière forcée par la butée (9).

3. Dispositif de levage de fenêtre selon au moins l'une quelconque des revendications précédentes, **caractérisé en ce que** le rail de guidage (2) présente une portion de coulisse pivotante (10) qui forme, par rapport à la portion de guidage linéaire (6), une projection saillante, la projection étant notamment réalisée en forme d'arc de cercle.

4. Dispositif de levage de fenêtre selon la revendication 2 et la revendication 3,
**caractérisé en ce que** la portion de coulisse pivotante (10) et la butée (9) sont positionnées sur le rail de guidage (2) de telle sorte que dans le cas d'un arrêt forcé du mouvement linéaire de l'axe de guidage (7) dans le rail de guidage (2) par la butée (9) et d'un entraînement subséquent par le biais du mécanisme d'entraînement (3), le premier élément de guidage (4) effectue un mouvement de pivotement, au cours duquel l'axe de guidage (7) est guidé dans la portion de coulisse pivotante (10).

5. Dispositif de levage de fenêtre selon au moins l'une quelconque des revendications précédentes, **caractérisé en ce que** le premier élément de guidage (4) présente un axe de fixation de vitre (11), l'axe de fixation de vitre (11) étant réalisé parallèlement et à distance de l'axe de guidage (7) et de l'axe de tringlerie (8).

6. Dispositif de levage de fenêtre selon la revendication 5,
**caractérisé en ce que** la distance entre l'axe de guidage (7) et l'axe de tringlerie (8) est inférieure à la distance de l'axe de guidage (7) à l'axe de fixation de vitre (11), le premier élément de guidage (4) étant de préférence formé en forme de Y.

7. Dispositif de levage de fenêtre selon au moins l'une quelconque des revendications précédentes, **caractérisé en ce que** le premier élément de guidage (4) et/ou le deuxième élément de guidage (5) présentent un élément de liaison (12) pour la liaison de l'élément de guidage (4, 5) à la vitre (1), l'élément de liaison (12) étant de préférence connecté de manière rotative à l'élément de guidage (4, 5).

8. Dispositif de levage de fenêtre selon au moins l'une quelconque des revendications précédentes, **caractérisé en ce que** le premier élément de guidage (4) dans sa position installée est l'élément de guidage inférieur.

9. Dispositif de levage de fenêtre selon au moins l'une quelconque des revendications précédentes, **caractérisé en ce que** le deuxième élément de guidage (5) est réalisé comme le premier élément de guidage (4) sous forme d'élément de levier.

10. Dispositif de levage de fenêtre selon au moins l'une quelconque des revendications précédentes 1 à 8,
**caractérisé en ce que** le deuxième élément de guidage (5) est réalisé sous forme de simple coulisseau, qui est guidé dans le rail de guidage (2), en particulier qui est guidé de manière complètement linéaire.

11. Dispositif de levage de fenêtre selon au moins l'une quelconque des revendications précédentes, **caractérisé en ce que** le dispositif de levage de fenêtre comprend un rail de guidage supplémentaire (13) avec un premier et un deuxième élément de guidage supplémentaire (14, 15), le rail de guidage supplémentaire (13) et le premier et le deuxième élément de guidage supplémentaire (14, 15) étant de préférence réalisés de manière identique à l'au moins un rail de guidage (2) et au premier et au deuxième élément de guidage (4, 5), le mécanisme d'entraînement (3) étant particulièrement préférablement connecté au premier élément de guidage (4) et au premier élément de guidage supplémentaire (14).

12. Porte de véhicule comprenant au moins un dispositif de levage de fenêtre selon au moins l'une quelconque des revendications précédentes, un cadre de fenêtre (16) et une vitre (1), la vitre (1) étant fixée aux deux éléments de guidage (4, 5), lors de la fermeture de la vitre (1), la vitre (1) effectuant une composante de mouvement perpendiculaire au guidage linéaire dans le rail de guidage (2), de telle sorte que la vitre (1) soit pressée contre le cadre de fenêtre (16).

13. Porte de véhicule selon au moins l'une quelconque des revendications précédentes, **caractérisée en ce que** le cadre de fenêtre (16) présente un joint d'étanchéité (17) et la vitre (1) est pressée contre le joint d'étanchéité (17) lors de la fermeture.
